Europäisches Patentamt

**European Patent Office**

Office européen des brevets

(11) Publication number: **0 219 339**
**A2**

(12) # EUROPEAN PATENT APPLICATION

(21) Application number: **86307915.8**

(22) Date of filing: **14.10.86**

(51) Int. Cl.⁴: **G 01 S 3/80**
**G 01 S 15/02**

(30) Priority: **14.10.85 GB 8525297**
**25.10.85 GB 8526385**

(43) Date of publication of application:
**22.04.87 Bulletin 87/17**

(84) Designated Contracting States:
**AT BE CH DE ES FR GR IT LI LU NL SE**

(71) Applicant: **GEC AVIONICS LIMITED**
**Airport Works**
**Rochester Kent ME1 2XX(GB)**

(72) Inventor: **Glasgow, John Arthur**
**30 Johnson Road Great Baddow**
**Chelmsford Essex(GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN(GB)**

(54) **Acoustic direction finder for use as an active range finder.**

(57) Two sound sensors A and B spaced by distance D listen for sounds within a wide band of wavelengths the shortest of which is substantially less than the distance D and the longest wavelength of which is comparable with D. All the frequency components within that band from respective sensors are correlated to produce an output indicating the delay in the time of arrival of the signal at A relative to B. This delay is indicative of the direction of the target. The presence of a target is sensed by a level detector and causes the apparatus to become active transmitting signals from A and B in a direction, controlled by a variable delay, which is the same direction as that of the target. The transmitted signal irradiates the target more strongly so that periods between transmitted pulses can be used in the receiver to obtain more accurate direction information. Also, by correlating the transmitted and received signals range information can be obtained. The range and directional information is used to control a launching mechanism.

EP 0 219 339 A2

./...

Croydon Printing Company Ltd.

Sound Locators                    I/7141/ABA

This invention relates to an acoustic apparatus for sensing the direction of a target, the terms acoustic and sound etc. being used in this specification to refer generically to ultrasonic and subsonic frequencies in addition to audio frequencies.

One technique for locating the direction of noisy sources such as tracked vehicles is to listen to the noise made by the target vehicle on a number of spaced sensors and to cross-correlate the noise picked up by separate sensors with one another in order that the times of arrival of the separate noises, relative to some arbitary time, may be measured. Thus the direction of the noise radiating vehicle is determined by the application of geometry.

Existing systems employing such techniques use one predominant frequency only of the noise from the vehicle or other source and, in order to achieve sufficiently unambiguous directionality, use a large number of sensors spaced apart by a distance substantially less than the wavelength of the predominant frequency. This avoids the formation of grating lobes (otherwise known as beam splitting) which would otherwise give rise to ambiguity of direction. The large number of sensors makes the system necessarily expensive and this invention arose with a view to providing similar directional information using a low number of sensors at a correspondingly low cost.

The invention provides apparatus for sensing the direction of a target within a region under observation which target generates or reflects sound comprising two sound sensors A and B capable of transducing into electrical form sound signals spread sufficiently continuously over a sufficiently wide band of wavelengths to ensure that the effect of grating lobes is substantially reduced; and means for passing all frequency components within that band from each of the sensors to a time measuring device which produces an output indicating the delay in the time of arrival of a signal at A relative to B; this delay being indicative of the direction of the target relative to a line joining A and B.

The same principle can be applied to the transmission of a beam and accordingly the invention also provides apparatus for producing a beam of acoustic radiation comprising at least two sound emitters A and B capable of transducing into sound electrical signals spread sufficiently continuously over a sufficiently wide band of wavelengths to ensure that the effect of grating lobes is substantially reduced; and a multifrequency waveform generator for generating such electrical signals; and means for passing the output of the waveform generator to each sound emitter.

The components of the wide band width add only in the correct direction and thus, by using the wide band width, ambiguity of direction arising from grating lobes can be avoided without resorting to the use of closely spaced sensors as in the previously known systems.

The wide band of wavelengths will preferably be chosen so that shortest wavelength is substantially less than the distance D between the sensors and so that the longest wavelength is comparable with D such a choice being conducive to the avoidance of significant grating lobes.

The band of frequencies is preferably wide enough to span wavelengths from D to D/4 and more preferably from 2D to D/4. Of course wider bands than that give an even better result.

It is possible to use just two sensors arranged in a horizontal plane; but this will result in ambiguity as to whether the direction of the source is to one side or the other of a vertical plane intersecting the sensors. This ambiguity can be resolved by adding a third sensor C. However this still leaves an ambiguity of direction to one side or the other of the plane intersecting the three sensors A, B & C. This further ambiguity can be resolved by adding a fourth sensor D, not in that plane.

The time measuring device used to sense the direction of the received energy is preferably a correlator. Where, as will normally be the case, it is desired to steer the transmitted beam to point it in a selected direction, a variable differential delay can be introduced between the signal applied to the different emitters.

A system employing both a receiver and a transmitter as defined above is particularly valuable. The receiver can be arranged to act passively and can include means for recognising characteristics in the received signal consistent with the presence of a target of interest. In a simple case such characteristics can simply be a high amplitude value. On recognition of a target the system can be switched to an active mode in which the transmitter is used to transmit acoustic radiation in the direction of the target as sensed by the receiver. If this radiation is pulsed the times between pulses can be used by the receiver to obtain more accurate directional information. Range information can also be obtained by correlating the transmitted signal with the received signal or alternatively by noting the time difference between transmission and reception of a pulse. Such a system can be employed to launch a missile towards a target at the correct direction and range and is of notable value in that it operates entirely passively until immediately before launching of the missile.

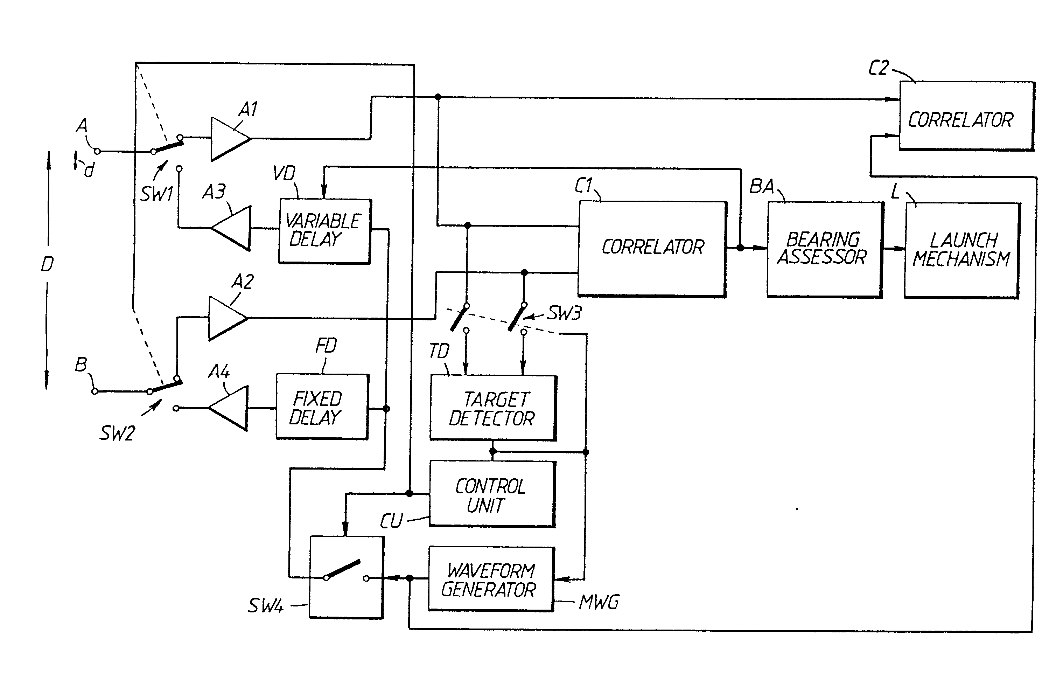

One way in which the invention may be performed will now be described by way of example with reference to the accompanying drawing of a control system constructed in accordance with the invention for launching a missile towards a target.

The illustrated apparatus normally adopts a passive mode of operation during which sensors A and B, which may be microphones or hydrophones, receive ambient noise. The switches SW1 and SW2 are in the illustrated position and received signals are passed to amplifiers A1 and A2. These amplifiers are notably able to pass a wide band signal by which term is meant a signal corresponding to wavelengths spread throughout the range D to d. D is the approximate distance of separation of the two sensors A and B and d is a small fraction of that distance, typically 1/10 of it. The amplified signals are correlated by a correlator C1, which measures the difference in time of arrival of a signal at A and B. This time difference together with a knowledge of the velocity of sound and the distance of separation of points A and B is used in a bearing assessor BA to determine the direction of the source of noise.

The outputs of both of the amplifiers eg. A2 are passed through a switch SW3 to a target detection circuit TD which makes a decision that a target is

- 6 -

present when the average of the amplitudes of its inputs exceeds a certain threshold. In response to such a threshold crossing the circuit TD produces an output signal lasting a predetermined duration during which the apparatus adopts an active mode. An output signal from the target detector TD opens the switch SW3 and switches on a multifrequency waveform generator MWG which produces a noise-like signal containing components throughout the wide band which has previously been mentioned.

The output from TD also causes a control unit CU to produce pulses each of which changes the positions of switches SW1 and SW2 to their other states and each of which closes a switch SW4 which acts as a pulse modulator to pass pulses from the output of the generator MWG. These pulses pass through amplifiers A3 and A4, through variable and fixed delay devices VD and FD; through the switches SW1 and SW2; and finally to the elements A and B which operate as transmitters.

The variable delay VD is controlled by the correlator C1 so as to impose a relative delay on the signal transmitted from A and B equal to the measured delay of the received signal at A relative to B. In this way the direction of transmission is made to be the same direction of the target, an advantage from the point of view of efficiency and of covertness of operation.

During the intervals between transmitted pulses the receiving circuitry receives an enhanced signal and the directional information is more reliable. Also during these periods range information is obtained from a correlator C2 which correlates the transmitted and received signals and establishes the time difference between them and therefore the range of the target. This range information at the output of correlator C2 together with the bearing information from the output of the bearing assessor BA is passed to a launching mechanism L to launch a missile towards the target at the specified bearing and range.

CLAIMS

1. Apparatus for sensing the direction of a target within a region under observation which target generates or reflects sound comprising two sound sensors A and B capable of transducing into electrical form sound signals spread over a sufficiently wide band of wavelengths to ensure that the effect of grating lobes is substantially reduced; and means for passing all frequency components within that band from each of the sensors to a time measuring device which produces an output indicating the delay in the time of arrival of a signal at A relative to B; this delay being indicative of the direction of the target relative to a line joining A and B.

2. Apparatus for producing a beam of acoustic radiation comprising at least two sound emitters A and B capable of transducing into sound electrical signals spread over a sufficiently wide band of wavelengths to ensure that the effect of grating lobes is substantially reduced; and a multifrequency waveform generator for generating such electrical signals; and means for passing the output of the wave form generator to each sound emitter.

3. Apparatus according to claim 2 in which means is included for introducing a variable differential delay between the signal as applied to the different emitters to control the direction of sound emission.

4. A target detection system comprising means according to claim 1 for sensing the direction of a target; means for recognising from the output of one or both of the sensors a sound likely to have come from a target of interest; and means according to claim 2 for irradiating the target with pulses of acoustic radiation.

5. Apparatus according to claim 4 including means according to claim 3 arranged to ensure that the beam of acoustic radiation is transmitted in the direction of the target.

6. Apparatus according to claim 2,3,4 or 5 comprising a second correlator for correlating the transmitted signal with the received signal to deduce the range of the target.

7. A device according to any preceding claims including means for launching a missile at the detected target.

8. Apparatus according to claim 1 or 2 in which the wide band extends from a wavelength substantially less than D to a wavelength which is comparable with D; where D is the spacing of the sensors.

9. Apparatus according to claim 8 in which the band of wavelengths includes wavelengths from D to D/4.

10. Apparatus according to claim 9 in which the bands includes wavelengths from 2D to D/5.